# EUROPEAN PATENT SPECIFICATION

(11) **EP 2 031 120 B1**
(45) Date of publication and mention of the grant of the patent: **20.01.2010**
(21) Application number: 07115319.1
(22) Date of filing: 30.08.2007
(51) Int. Cl.: D06F 39/08, A47L 15/42

(54) **Ecological washing machine**
Ökologische Waschmaschine
Machine à laver écologique

(43) Date of publication of application: 04.03.2009
(73) Proprietor: Electrolux Home Products Corporation N.V., 1930 Zaventem (BE)
(72) Inventor: Cimetta, Silvano, 33100 Treviso (IT); Sacilotto, Simone, 33082 Azzano Decimo (Pordenone) (IT); Favot, Claudio, 33083 Chions (Pordenone) (IT)
(74) Representative: Baumgartl, Gerhard Willi

(56) References cited:
- DE-U1- 20 009 350
- US-A- 2 948 277
- US-A- 4 765 351
- US-B1- 6 499 321

## Description

The present invention relates to an apparatus to supply hot water for a washing machine, preferably of the household type (e.g. see document US-B-6499321), provided with improved means able of allowing an energy saving by using a certain amount of water, previously warmed up by means which are outside the machine itself, and particularly the water contained in a reservoir warmed up with a solar collecting panel, or collector, as will be named from now on.

The invention relates especially to a clothes washing machine, to which it will be then referred in the description, but it will be clear that it can be used, with obvious design and constructive arrangements, also with different types of machines which use hot water, as dish-washing machines etc.

It is known that the energy consumption of the household washing machines, as laundry or dish-washing machines, is mainly caused by the heating of the water therein used.

As such heating is produced with electric energy, which as well known is a very expensive energy source, for a long time the appliances manufactures have been dedicated to much cheaper energy sources, and particularly to the use of solar collectors, which, as well known, do heat the water from the solar radiation and hold it in suitable storing reservoirs, from which the so heated water is taken by the using machine when needed.

In the following of the instant description such storing reservoirs will be termed under the name: boiler.

As a heating source of the water, contained inside the boiler, further energy sources may be used, e.g. combustible gas, or fuel burned by suitable burners, etc.

After the water inside said boiler has been heated, it is then sent into the washing machine through normal hydraulic pipes.

However when the water from said boiler is let out, the water amount which is initially drawn is still cold water, as it is that part of water flow which is contained not in the reservoir but in the pipes linking the boiler to the machine.

As usually the volume of the water needed in a washing cycle is roughly similar to the volume contained in said pipes connecting the boiler to the washing machines, the actually still cold water, contained in said pipes, is introduced into the machine; as a consequence the use of said boiler and of the alternative energy source (solar collectors, gas, fuel coal etc.) is vanished.

It would therefore be desirable, and is actually a main purpose of the present invention, to provide:
- a water heating apparatus outside the machine itself, comprising related conveying, hydraulic deviation and recovering means of the cold water contained in said pipes,
- and a washing machine provided with control means able of commanding said hydraulic deviation means, which allow the introduction into said machine of only heated or anyway at a pre-defined temperature water.

Moreover said apparatus and said recovering and control means must consent to recover the still cold water contained inside the pipes between the boiler and the washing machine itself, so avoiding an useless energy waste.

According to the present invention, this and further aims are reached in an apparatus and in a washing machine incorporating the characteristics as recited in the appended claims and including such operating means as described below by mere way of non-limiting example with reference to the accompanying drawings, in which:
- Fig. 1 shows a basic hydraulic schematic of the hydraulic connections in an apparatus according to the invention,
- Fig. 2 shows a preferred embodiment of the hydraulic schematic of the apparatus according to the invention,
- Fig. 3 is an improved embodiment of the schematic of the previous figures,
- Fig. 4 and fig. 5 show two embodiments of a washing machine which can be integrated in an apparatus according to the invention.

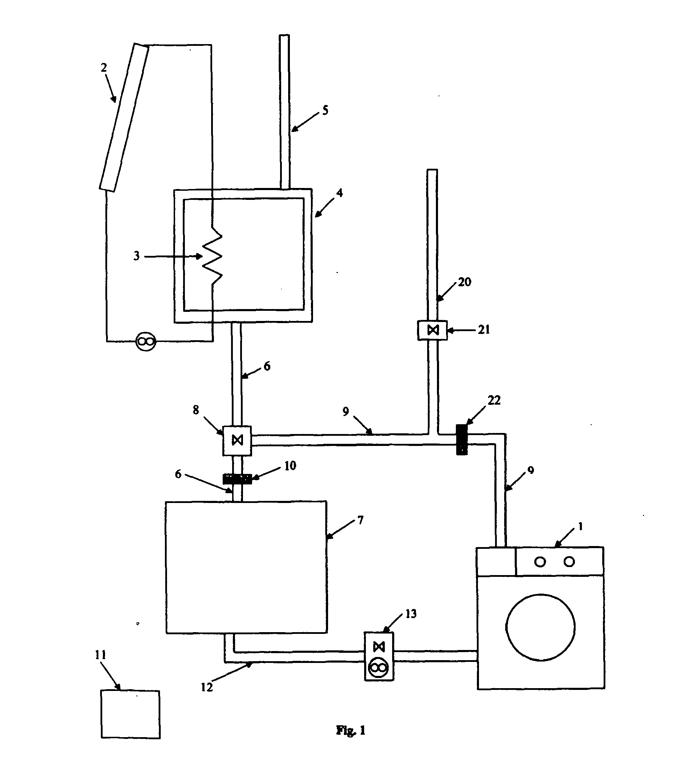

With ref. to fig. 1, an apparatus for the supply of hot water in a preferably household washing machine 1 is shown, comprising:
- a solar collector 2 able of heating, by known means and methods, and through an heat exchanger 3 the water contained inside a storage reservoir or boiler 4, which is conventionally supplied by the water mains.

The reader is here again asked to remember that, even if the instant invention is referred to water heating preferably through solar collectors, however it will be apparent that such heating may be obtained by any heating means, provided they are properly convenient , as a gas or fuel burner, a coal cauldron etc.

Said boiler is supplied with water by a conventional water mains 5; from said boiler 4 a first conduit 6 goes out and leads to a recovery reservoir 7 across some hydraulic deviation means, generally indicated as 8, and which typically may consist of a three-way valve.

Said hydraulic deviation means 8 are selectively controllable, with methods and means which will be better explained later on by suitable control means generally indicated as 11.

From said means 8 a second conduit 9 branches out, which connects said hydraulic deviation means to said washing machine.

Moreover in said first conduit 6 a temperature sensor 10, preferably a properly selected NTC, is arranged downstream said deviation means 8, and is connected to said same control means 11.

At this point the invention may already be understood in its simplest embodiment; when the washing machine has been activated, and the water inlet and heating phase of the washing bath takes place, said control means 11, which has to be integrally and functionally connected to the machine, and also may be comprised in it, let said deviation means 8 open, so that the water coming from the boiler 4 is being flown in the first conduit 6 and is finally sent into said recovery reservoir 7.

The temperature sensor 10 detects the temperature of the water flow in the first conduit 6, and sends the relevant signal to said control means 11 which, properly programmed, compare said temperature to a reference temperature; if the detected temperature is less that said reference temperature, said hydraulic deviation means 8 goes on to allow the water flow to said recovery reservoir 7.

As soon as the temperature detected by said sensor 10 exceeds such reference temperature, then said control means makes said deviation means 8 stop the flow into said reservoir 7 and let a water flow, coming from the boiler, into said second conduit 9, and therefore directly into the machine 1.

It will be apparent to the man skilled in the art that said reference temperature will be selected as the minimum temperature value programmed by the selected washing cycle on the machine.

Therefore said means is arranged and made to work in such a way that the temperature of the water let into the machine be always compatible, (that is equal or higher), to the temperature pre-programmed by the selected washing cycle.

It will be moreover apparent that the position of said hydraulic deviation means 8 on the first conduit 6 will be preferably as close as possible to said boiler, provided that the machine 1 is obviously close enough to said means 8.

If on the contrary said boiler is positioned at an appreciable distance from the machine 1, as usual in the general case, then it is more appropriate than said deviation means are arranged as downstream as possible inside said first conduit 6.

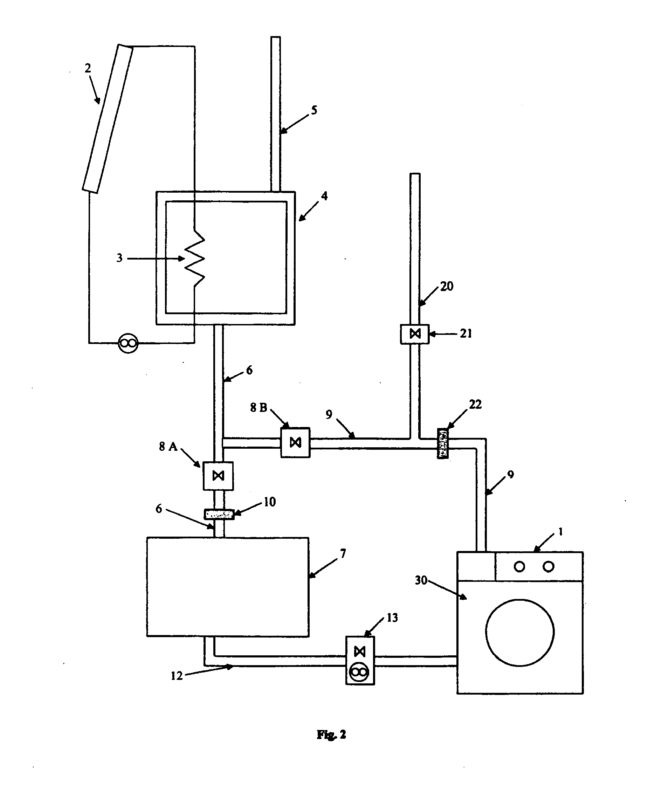

With ref. to fig. 2, said hydraulic deviation means may advantageously consist of a first electro-valve 8A placed on said first conduit 6, and a second valve 8B placed on said second conduit 9, which branches out from said first conduit 6 in a position upstream said first valve 8A.

In this case too said two valves 8A and 8B are connected and selectively controllable by said control means 11, which allow that in said second conduit 9, downstream said second valve 8B, a water flow is drawn whose temperature is only at a predetermined minimum temperature.

From said recovery reservoir 7 a third conduit 12 branches out, which leads into said machine 1.

In said third conduit 12 respective hydraulic means 13 are arranged, whose activation allows the opening/closing of said third conduit 12, so as when said third conduit 12 is being opened, it allows the water, contained into the recovery reservoir 7, to be flown into said machine 1.

Such a working mode is implemented during the water loading for the rinsing step, and exploiting the fact that, for such rinsing water load, only cold water is normally used; therefore the water contained inside said recovery reservoir 7 may be advantageously used, as it is already cold, and being not requested to be heated, is being conveyed into said machine 1.

It is then avoided that the water contained inside said recovery reservoir 7, and previously drawn from the conduit 6, is uselessly wasted.

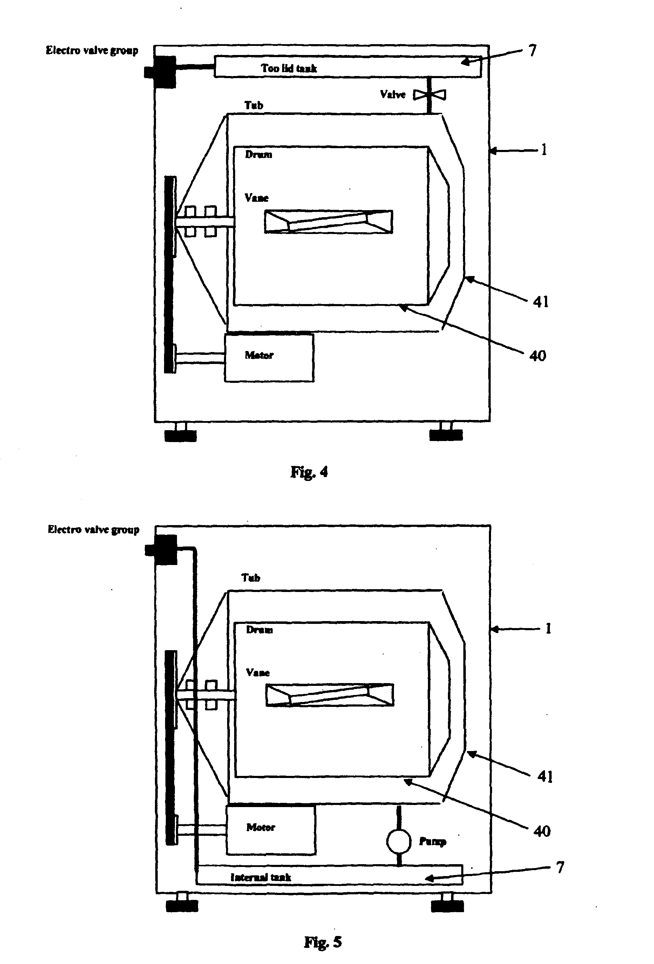

Said hydraulic means 13 are implemented by a third valve, when said recovery reservoir 7 is placed in an higher position (fig. 4) than the inlet height of said third conduit 12 into the machine, by opening said third valve the water spontaneously flows down into said machine 1 for gravity.

In the opposite case (fig. 5), should said recovery reservoir 7 be placed in a position lower than the inlet height of said third conduit 12 into the machine, it will be needed to pump the water from said recovery reservoir 7, and in such a case said hydraulic means 13 will consist essentially of a pump.

Obviously said hydraulic means 13, however they are realized, are controlled by said control means 11 so as their activation would be coordinated with the activation of the rinsing phase.

The described embodiment allows further advantageous improvements and a better production flexibility; as a matter of facts it may happen that the selected washing cycle of the machine 1 does require an hotter temperature than the temperature of the water supplied by the water mains, but a colder temperature than the water supplied by the boiler 4.

Therefore no one of the respective water flows could be used, apart that, obviously the water from the water mains is used, to be heated by the machine with full conventional mode; yet such method would fully waste the economic opportunity of using the water already heated in the boiler 4.

According to one of said improvements, a fourth conduit 20 is used, which is connected to the water mains, and which admits into said second conduit 9, and a respective fourth electro-valve 21; moreover a second temperature sensor 22 is arranged downstream the connection of said fourth conduit 20 into said second conduit 9.

Said fourth valve 21 and said sensor 22, connected to said control means 11, allow the following operation during the water loading for the washing phase: when said sensor 22 detects that the temperature of the water flow from the boiler 4 and inside the second conduit 9 is higher than a predetermined level, which is selected by the specific washing cycle of the machine 1, the fourth valve 21 is then opened on this fourth conduit 20.

In such a way it is allowed that into said second conduit 9 a mixing occurs between hot water flow , coming from the boiler 4, and cold water flow coming from said fourth conduit 20; such two flows are being mixed with each other and their average temperature is being detected by said second temperature sensor 22.

According to the temperature difference between the so detected temperature from the second sensor 22 with respect to the temperature set by the selected washing cycle, said control means selectively command the opening and the closing of said second valve 8B and of said fourth valve 21, even in alternate mode, so as to obtain the pre-defined average temperature of the water flow from said second conduit 9.

Moreover such possibility is also particularly welcomed if the machine is a washing machine provided with top loading of the water flow; as a matter of facts in such a case the water would fall directly on the laundry, and if the water temperature were too high, the laundry itself would be obviously damaged.

Then the possibility of adjusting the temperature of the water falling down into the tub and over the drum does avoid such serious drawback.

Of course some conditions could occur of excessive frequency of said temperature changes; in this case the result is that the two valves 8B and 21 would switch with the same high frequency, which turns to be substantially useless, more than detrimental.

Furthermore in the washing machine whose water **loading** is not given top-down and on the drum, but substantially with a progressive rising from the tub bottom of the bath level, what interests is not the temperature in the fourth conduit 20, but the final temperature of the water inside the tub of said washing machine.

So in order to eliminate the drawback of an excessive switching frequency of said two valves in a machine with water **loading** from "the bottom", a third temperature sensor 30, obviously connected to said control means 11, is arranged inside the washing machine tub.

Said sensor 30 obviously detects the final temperature of the water inside the tub, which temperature changes in a very slower way than the temperature variations inside said second conduit 9.

Moreover said third temperature sensor 30 may be identically used even as the normal temperature sensor the machine is provided with; therefore it may be obtained also an additional profitable saving in the machine production costs.

Basically said control means 11 may be advantageously programmed so as, with reference of the defined temperature "Td" in a washing cycle set in the machine, and if the temperature detected by said third sensor 30 is higher than said temperature "Td", then said fourth valve 21 is being opened to admit cold water from the water mains into the machine tub, until a temperature equal to said pre-defined temperature Td is reached.

When this condition is achieved, both two valves 8B and 21 are kept opened.

If instead the detected temperature rises again over sad predefined temperature **Td**, then said second valve 8B is closed, and only said fourth valve 21 is left opened.

If instead the detected temperature goes down under said defined temperature **Td**, then said two valves 8B and 21 are activated in the opposite sense as just explained, so that the bath temperature in the machine tub is being progressively raised.

Such procedure goes automatically on until the reach of the water load as per the selected washing programme.

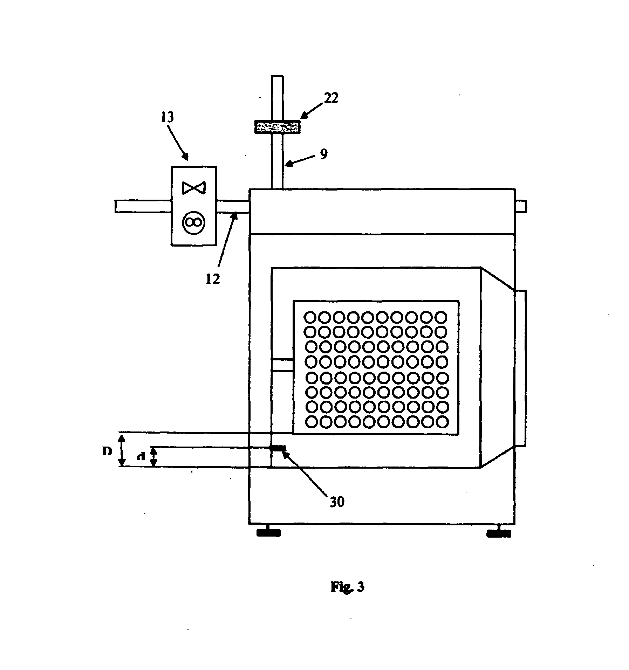

Advantageously, and with ref. to fig. 3, if the machine is a laundry washing machine with a drum 40 rotating inside a tub 41, then it appears convenient that said third temperature sensor 30 be placed at an height "d", with respect to the tub bottom, lower than the height "D" of the drum bottom with respect to the same tub bottom.

In the facts, should the machine draw from the second conduit 9 a water flow whose temperature is too high and harmful for the type of laundry to be washed, then the presence of the third sensor 30 on the tub lower portion is able to detect the bath temperature well before the water level reaches the drum bottom level.

As a matter of facts if the water level reaches the laundry to be washed inside the drum, and the water temperature is still too high, it may obviously damage the laundry load before the same bath temperature is being properly pulled down.

Then the presence of this third sensor 30 on the tub bottom forces, through said control means, to introduce and properly mix, according to the previously explained modes, the cold water too, therefore avoiding the risk of damaging the laundry load due to the excessive water temperature.

## Claims

1. An apparatus for the supply of hot water to a washing machine (1), which is preferably household, and comprising:
- a storage reservoir or boiler (4) containing an amount of liquid, especially water, supplied by a proper outer source, including the water mains (5),
- heating means (2, 3) of the liquid contained inside said boiler, **characterized in that** it comprises also:
- a recovery reservoir (7), distinct from said boiler (4),
- a first conduit (6) connecting said boiler (4) to said recovery reservoir (7),
- selectively controllable hydraulic deviation means (8) placed across said first conduit (6),
- a second conduit (9) connecting said hydraulic deviation means (8) to said washing machine (1),
- a first temperature sensor (10) arranged in said first conduit (6) downstream said hydraulic deviation means (8),
- control means (11) able of receiving and processing the signal emitted by said first temperature sensor (10) and transmitting suitable and corresponding ON/OFF commands to said hydraulic deviation means (8).

2. An apparatus according to claim 1, **characterized in that** said hydraulic deviation means (8) comprise a first valve (8A) arranged inside said first conduit (6), that said second conduit (9) branches out of said first conduit upstream of said first valve (8A), and that a second valve (88) is arranged into said second conduit (9).

3. An apparatus according to claim 2, **characterized in that** said first and second valves (8A, 8B) are selectively controllable by said control means (11).

4. An apparatus according to any of the previous claims, **characterized in that** :
- a third conduit (12) connects said recovery reservoir (7) to said washing machine (1),
- selectively controllable hydraulic means (13) are arranged with this third conduit (12), said hydraulic means (13) being able of allowing a fluid flowing from said recovery reservoir (7) to said washing machine (1).

5. An apparatus according to claim 4, **characterized in that** said hydraulic means (13) comprise either a valve or a pump.

6. An apparatus according to any of the previous claims, **characterized in that** said control means (11) are able of controlling said hydraulic deviation mans (8, 8A, 8B) so as a flowing is allowed from said boiler (4) to said recovery reservoir (7) through said first conduit (6), when the signal generated by said first temperature sensor (10) is representative of a temperature lower than a predetermined value.

7. An apparatus according to any of the previous claims, **characterized in that** a fourth conduit (20) is arranged to let into said second conduit (9) downstream said hydraulic deviation means (8, 8A, 8B) and upstream said machine (1), said fourth conduit (20) being supplied with cold water and preferably from the water mains (5) and being provided with a related valve (21) placed upstream the connection point of said fourth conduit (20) into said second conduit (9).

8. An apparatus according to claim 7, **characterized in that** in the portion of said second conduit (9), downstream the connection point of said fourth conduit (20), a second temperature sensor is provided (22).

9. An apparatus according to claim 7 or 8, **characterized in that** said washing machine (1) is provided with a tub (41) intended to contain the washing laundry, and that a third temperature sensor (39) is arranged inside said tub (41).

10. An apparatus according to claim 9, wherein said washing machine is moreover a laundry washing-machine (1) provided with a rotating drum (49) separated from the bottom of said tub (41), **characterized in that** said third sensor (30) is placed close to the bottom of said tub (41).

11. An apparatus according to claim 10, **characterized in that** said third sensor (30) is placed at such a distance (d) from the tub bottom to be able to detect the water temperature inside the tub (41) at a lower level than the lower distance (D) of said rotating drum (49) with respect to the same tub bottom.

12. An apparatus according to any claims from 8 on, **characterized in that**, during the water loading for the washing phase, said control means (11) is able of setting the selective opening/closing of said hydraulic deviation means (8, 8B) and of said fourth valve (21) according to the temperature detected by said second (22) or third (30) temperature sensor.

13. An apparatus according to claim 12, **characterized in that**, if the water temperature detected by said second sensor (22) or said third sensor (30) is higher than a predetermined level, said hydraulic deviation means (8,8b) are being activated so as to stop the water flowing into said second conduit (9) and to open the water flowing from said fourth conduit (20).

14. An apparatus according to claims 12 or 13, **characterized in that**, if the water temperature detected by said second sensor (22) or third sensor (30) is lower than a predetermined level, said control means (11) do activate:
- said hydraulic deviation means (8B) so as to open the water flowing into said second conduit (9) and,
- said fourth valve (21) so as to close the water flowing from said fourth conduit (20).

15. An apparatus according to any claims from 4 on, **characterized in that** during the rinsing water loading, said control means (11) is able of activating said hydraulic means (13) in said third conduit (12) so as to allow the water, contained inside said recovery reservoir (7), to flow into said machine (1).

## Patentansprüche

1. Vorrichtung zur Versorgung einer hauptsächlich für den Haushaltsgebrauch vorgesehenen Waschmaschine (1) mit Heißwasser, die Folgendes umfasst:
- einen Speicherbehälter oder Boiler (4), der eine Menge an Flüssigkeit, vor allem Wasser, enthält, das von einer geeigneten äußeren Quelle, einschließlich der Hauswasserleitung (5), zugeführt wird,
- Heizmittel (2, 3) für die in dem Boiler enthaltene Flüssigkeit, **dadurch gekennzeichnet, dass**
die Vorrichtung zudem Folgendes umfasst:
- einen von dem Boiler (4) verschiedenen Zusatzbehälter (7),
- eine erste Leitung (6), die den Boiler (4) mit dem Zusatzbehälter (7) verbindet,
- ein selektiv steuerbares, hydraulisches Umleitungsmittel (8), das an der ersten Leitung (6) angeordnet ist,
- eine zweite Leitung (9), welche das hydraulische Umleitungsmittel (8) mit der Waschmaschine (1) verbindet,
- einen ersten Temperatursensor (10), der in der ersten Leitung (6) stromabwärts von dem hydraulischen Umleitungsmittel (8) angeordnet ist,
- ein Steuermittel (11), das geeignet ist, das vom ersten Temperatursensor (10) abgegebene Signal zu empfangen und zu verarbeiten und geeignete sowie entsprechende ON/OFF-Befehle an das hydraulische Umleitungsmittel (8) zu senden.

2. Vorrichtung gemäß Anspruch 1, **dadurch gekennzeichnet, dass** das hydraulische Umleitungsmittel (8) ein erstes Ventil (8A) umfasst, das in der ersten Leitung (6) angeordnet ist, dass die zweite Leitung (9) aus der ersten Leitung stromaufwärts des ersten Ventils (8A) abzweigt und dass ein zweites Ventil (8B) in der zweiten Leitung (9) angeordnet ist.

3. Vorrichtung gemäß Anspruch 2, **dadurch gekennzeichnet, dass** das erste und das zweite Ventil (8A, 8B) mit dem Steuermittel (11) selektiv steuerbar sind.

4. Vorrichtung gemäß einem der vorangehenden Ansprüche, **dadurch gekennzeichnet, dass**:
- eine dritte Leitung (12) den Zusatzbehälter (7) mit der Waschmaschine (1) verbindet,
- an dieser dritten Leitung (12) ein selektiv steuerbares hydraulisches Mittel (13) angeordnet ist, wobei dieses hydraulische Mittel (13) dazu ausgeführt ist, das Strömen eines Fluids vom Zusatzbehälter (7) zur Waschmaschine (1) zu ermöglichen.

5. Vorrichtung gemäß Anspruch 4, **dadurch gekennzeichnet, dass** das hydraulische Mittel (13) ein Ventil oder eine Pumpe umfasst.

6. Vorrichtung gemäß einem der vorangehenden Ansprüche, **dadurch gekennzeichnet, dass** das Steuermittel (11) geeignet ist, die hydraulischen Umleitungsmittel (8, 8A, 8B) so zu steuern, dass ein Strömen vom Boiler (4) zum Zusatzbehälter (7) durch die erste Leitung (6) möglich ist, wenn das vom ersten Temperatursensor (10) generierte Signal eine Temperatur unter einem Sollwert anzeigt.

7. Vorrichtung gemäß einem der vorangehenden Ansprüche, **dadurch gekennzeichnet, dass** eine vierte Leitung (20) so angeordnet ist, dass sie stromabwärts der hydraulischen Umleitungsmittel (8, 8A, 8B) und stromaufwärts der Maschine (1) in die zweite Leitung (9) einmündet, wobei die vierte Leitung (20) mit Kaltwasser - vorzugsweise aus der Hauswasserleitung (5) - gespeist wird und mit einem entsprechenden Ventil (21) ausgestattet ist, das stromaufwärts des Anschlusspunkts der vierten Leitung (20) an der zweiten Leitung (9) angeordnet ist.

8. Vorrichtung gemäß Anspruch 7, **dadurch gekennzeichnet, dass** in dem Abschnitt der zweiten Leitung (9) stromabwärts des Anschlusspunkts der vierten Leitung (20) ein zweiter Temperatursensor (22) vorgesehen ist.

9. Vorrichtung gemäß Anspruch 7 oder 8, **dadurch gekennzeichnet, dass** die Waschmaschine (1) mit einem Laugenbehälter (41) ausgerüstet ist, der die zu waschende Wäsche aufnehmen soll, und dass in diesem Laugenbehälter (41) ein dritter Temperatursensor (39) angeordnet ist.

10. Vorrichtung gemäß Anspruch 9, wobei die Waschmaschine überdies eine Wäschewaschmaschine (1) ist, die mit einer rotierenden Trommel (49) ausgestattet ist, welche vom Boden des Laugenbehälters (41) getrennt ist, **dadurch gekennzeichnet, dass** der dritte Sensor (30) nahe am Boden des Laugenbehälters (41) angeordnet ist.

11. Vorrichtung gemäß Anspruch 10, **dadurch gekennzeichnet, dass** der dritte Sensor (30) in einem solchen Abstand (d) vom Laugenbehälterboden angeordnet ist, dass er die Wassertemperatur im Laugenbehälter (41) auf einem tieferen Niveau als der untere Abstand (D) der rotierenden Trommel (49) mit Bezug auf den selben Laugenbehälterboden zu erfassen vermag.

12. Vorrichtung gemäß einem der Ansprüche 8 und folgende, **dadurch gekennzeichnet, dass** das Steuermittel (11) während der Wasserzuführung für die Waschphase geeignet ist, das selektive Öffnen/Schließen der hydraulischen Umleitungsmittel (8, 8B) und des vierten Ventils (21) je nach der vom zweiten (22) oder dritten (30) Temperatursensor erfassten Temperatur einzustellen.

13. Vorrichtung gemäß Anspruch 12, **dadurch gekennzeichnet, dass** wenn die vom zweiten Sensor (22) oder vom dritten Sensor (30) erfasste Wassertemperatur über einem Sollwert liegt, die hydraulischen Umleitungsmittel (8, 8B) aktiviert werden, um das Strömen des Wassers in die zweite Leitung (9) zu unterbrechen und das Strömen des Wassers von der vierten Leitung (20) freizugeben.

14. Vorrichtung gemäß Anspruch 12 oder 13, **dadurch gekennzeichnet, dass** wenn die vom zweiten Sensor (22) oder vom dritten Sensor (30) erfasste Wassertemperatur unter einem Sollwert liegt, das Steuermittel (11) Folgendes aktiviert:
- das hydraulische Umleitungsmittel (8B) zur Freigabe der Wasserströmung in die zweite Leitung (9), und
- das vierte Ventil (21) zum Schließen der Wasserströmung von der vierten Leitung (20).

15. Vorrichtung gemäß einem der Ansprüche 4 und folgende, **dadurch gekennzeichnet, dass** das Steuermittel (11) während der Zuführung des Spülwassers geeignet ist, das hydraulische Mittel (13) in der dritten Leitung (12) zu aktivieren, um dem im Zusatzbehälter (7) aufbewahrten Wasser zu ermöglichen, in die Maschine (1) zu strömen.

## Revendications

1. Appareil pour l'amenée d'eau chaude à une machine à laver (1) qui est de preference domestique, et comprenant :
- un réservoir de stockage ou chaudière (4) contenant une quantité de liquide, particulièrement de l'eau, fournie par une source externe propre, incluant le réseau d'adduction et de distribution d'eau (5),
- des moyens de chauffage (2, 3) du liquide se trouvant à l'intérieur de ladite chaudière, **caractérisé en ce qu'**il comporte également :
- un réservoir de récupération (7) distinct de ladite chaudière (4),
- une première conduite (6) reliant ladite chaudière (4) audit réservoir de récupération (7),
- des moyens de déviation hydrauliques sélectivement contrôlables placés sur ladite première conduite (6),
- une deuxième conduite (9) reliant lesdits moyens de déviation hydrauliques (8) à ladite machine à laver (1),
- un premier capteur de température (10) agencé dans ladite première conduite (6) en aval desdits moyens de déviation hydrauliques (8),
- des moyens de commande (11) aptes à recevoir et à traiter le signal émis par ledit premier capteur de température (10) et à transmettre des instructions marche/arrêt appropriées et correspondantes auxdits moyens de déviation hydrauliques (8).

2. Appareil selon la revendication 1, **caractérisé en ce que** lesdits moyens de déviation hydrauliques (8) comprennent une première vanne (8A) agencée à l'intérieur de ladite première conduite (6), que ladite deuxième conduite (9) se sépare de ladite première conduite en amont de ladite première vanne (8A), et **en ce qu'**une deuxième vanne (8B) est agencée dans ladite deuxième conduite (9).

3. Appareil selon la revendication 2, **caractérisé en ce que** lesdites première et deuxième vannes (8A, 8B) peuvent être commandées sélectivement par lesdits moyens de commande (11).

4. Appareil selon l'une quelconque des revendications précédentes, **caractérisé en ce que** :
- une troisième conduite (12) relie ledit réservoir de récupération (7) à ladite machine à laver (1),
- des moyens hydrauliques sélectivement contrôlables (13) sont agencés dans cette troisième conduite (12), lesdits moyens hydrauliques (13) étant aptes à permettre un écoulement du fluide dudit réservoir de récupération (7) à ladite machine à laver (1).

5. Appareil selon la revendication 4, **caractérisé en ce que** lesdits moyens hydrauliques (13) comprennent soit une vanne soit une pompe.

6. Appareil selon l'une quelconque des revendications précédentes, **caractérisé en ce que** lesdits moyens de commande (11) sont aptes à commander lesdits moyens de déviation hydrauliques (8, 8A, 8B) de sorte qu'un écoulement est permis de ladite chaudière (4) audit réservoir de récupération (7) à travers ladite première conduite (6) lorsque le signal produit par ledit premier capteur de température (10) est représentatif d'une température inférieure à une valeur prédéterminée.

7. Appareil selon l'une quelconque des revendications précédentes, **caractérisé en ce qu'**une quatrième conduite (20) est agencée pour mener dans ladite deuxième conduite (9) en aval desdits moyens de déviation hydrauliques (8, 8A, 8B) et en amont de ladite machine (1), ladite quatrième conduite (20) étant alimentée en eau froide et de préférence par le réseau d'adduction et de distribution d'eau (5) et étant munie d'une vanne associée (21) placée en amont du point de connexion de ladite quatrième conduite (20) dans ladite deuxième conduite (9).

8. Appareil selon la revendication 7, **caractérisé en ce que** dans la portion de ladite deuxième conduite (9), en aval du point de connexion de ladite quatrième conduite (20), un deuxième capteur de température est prévu (22).

9. Appareil selon la revendication 7 ou 8, **caractérisé en ce que** ladite machine à laver (1) présente une cuve (41) destinée à contenir le linge à laver, et **en ce qu'**un troisième capteur de température (39) est agencé à l'intérieur de ladite cuve (41).

10. Appareil selon la revendication 9, dans lequel ladite machine à laver est par ailleurs une machine à laver le linge (1) munie d'un tambour tournant (49) séparé du fond de ladite cuve (41), **caractérisé en ce que** ledit troisième capteur (30) est placé à proximité du fond de ladite cuve (41).

11. Appareil selon la revendication 10, **caractérisé en ce que** ledit troisième capteur (30) est placé à une distance (d) telle du fond de la cuve pour pouvoir détecter la température de l'eau à l'intérieur de la cuve (41) à un niveau plus bas que la distance inférieure (D) dudit tambour tournant (49) relativement au même fond de cuve.

12. Appareil selon l'une quelconque des revendications à partir de 8, **caractérisé en ce que**, durant le chargement d'eau pour la phase de lavage, ledit moyen de commande (11) est apte à régler l'ouverture/fermeture sélective desdits moyens de déviation hydrauliques (8, 8B) et de ladite quatrième vanne (21) selon la température détectée par ledit deuxième (22) ou troisième (30) capteur de température.

13. Appareil selon la revendication 12, **caractérisé en ce que**, si la température de l'eau détectée par ledit deuxième capteur (22) ou ledit troisième capteur (30) est plus élevée qu'un niveau prédéterminé, lesdits moyens de déviation hydrauliques (8, 8B) sont activés pour arrêter l'écoulement de l'eau dans ladite deuxième conduite (9) et pour ouvrir l'écoulement de l'eau de ladite quatrième conduite (20).

14. Appareil selon les revendications 12 ou 13, **caractérisé en ce que**, si la température de l'eau détectée par ledit deuxième capteur (22) ou troisième capteur (30) est plus basse qu'un niveau prédéterminé, lesdits moyens de commande (11) activent :
- ledit moyen de déviation hydraulique (8B) de manière à ouvrir l'écoulement de l'eau dans ladite deuxième conduite (9) et
- ladite quatrième vanne (21) de manière à fermer l'écoulement de l'eau de ladite quatrième conduite (20).

15. Appareil selon l'une quelconque des revendications à partir de 4, **caractérisé en ce que** durant le chargement de l'eau de rinçage, ledit moyen de commande (11) est apte à activer ledit moyen hydraulique (13) dans ladite troisième conduite (12) pour permettre l'écoulement de l'eau, se trouvant à l'intérieur dudit réservoir de récupération (7), dans ladite machine (1).
